# EUROPEAN PATENT SPECIFICATION

(11) **EP 0 562 332 B1**
(45) Date of publication and mention of the grant of the patent: **13.09.1995**
(21) Application number: 93103558.8
(22) Date of filing: 05.03.1993
(51) Int. Cl.: B60Q 3/04, B60K 37/02, G01D 11/28

(54) **Instrument panel with light intensity and colour variation**
Helligkeits- und farbenveränderbare Armaturenbeleuchtung
Tableau de bord à couleur et luminosité variable

(30) Priority: 26.03.1992 IT TO920270
(43) Date of publication of application: 29.09.1993
(73) Proprietor: FIAT AUTO S.p.A., 10135 Torino (IT)
(72) Inventor: Di Giusto, Nevio, I-10100 Torino (IT)
(74) Representative: Di Francesco, Gianni

(56) References cited:
- EP-A- 0 116 672
- EP-A- 0 351 259
- EP-A- 0 382 880
- GB-A- 2 018 485
- GB-A- 2 237 385
- US-A- 4 012 632
- PATENT ABSTRACTS OF JAPAN vol. 15, no. 215 (M-1119)31 May 1991 & JP-A-30 61 136 (MAZDA MOTOR CORP.) 15 March 1991

## Description

This invention falls within the field of motor vehicle instrumentation, and relates to an instrument panel, wherein the intensity and colour of the background light is varied.

Display devices and systems in which the speedometer light colour can be selectively varied have been known for some time, such as that described in European patent application EP-A-317850, in which a liquid crystal display is used having a series of comb electrodes associated with corresponding colour filters to vary the light colour in a digital speedometer.

Other patent publications, such as SE-8803-015 and RD-298-031, describe systems in which the light colour of the pointer of the speedometer varies automatically with the vehicle speed to bring the speedometer to the attention of the driver.

The object of the present invention is to provide a background lighting for illuminating a plurality of meters of an instrument panel in which the light intensity and the colour can be varied at will to the most pleasing level by the driver; by varying these two parameters a range of combinations can be obtained varying from the softest light with the most restful colour to brilliant high-colour light.

This and further objects and advantages, which will be more apparent hereinafter, are attained according to the invention by a background lighting for illuminating a plurality of meters of a motor vehicle instrument panel comprising a screen, with its outer surface preferably of dark colour, in which a series of apertures are provided for the passage of light from the rear to the front of the screen, or a series of impressions for reflecting the light onto the screen, said apertures or impressions being provided in correspondence with graduated scales for the meters present on the panel, comprising in combination:
- at least two light sets of different colour;
- first means for manually adjusting the total current fed to said light sets;
- second means for varying the light intensity of one of said light sets relative to the other.

The structural and operational characteristics of some preferred but non-limiting embodiments of the device according to the invention are described hereinafter with reference to the accompanying drawings, in which:
Figure 1 is a schematic view of an instrument panel according to the present invention;
Figures 2 and 3 are schematic representations of two alternative basic electrical circuits of the instrument panel of the invention.

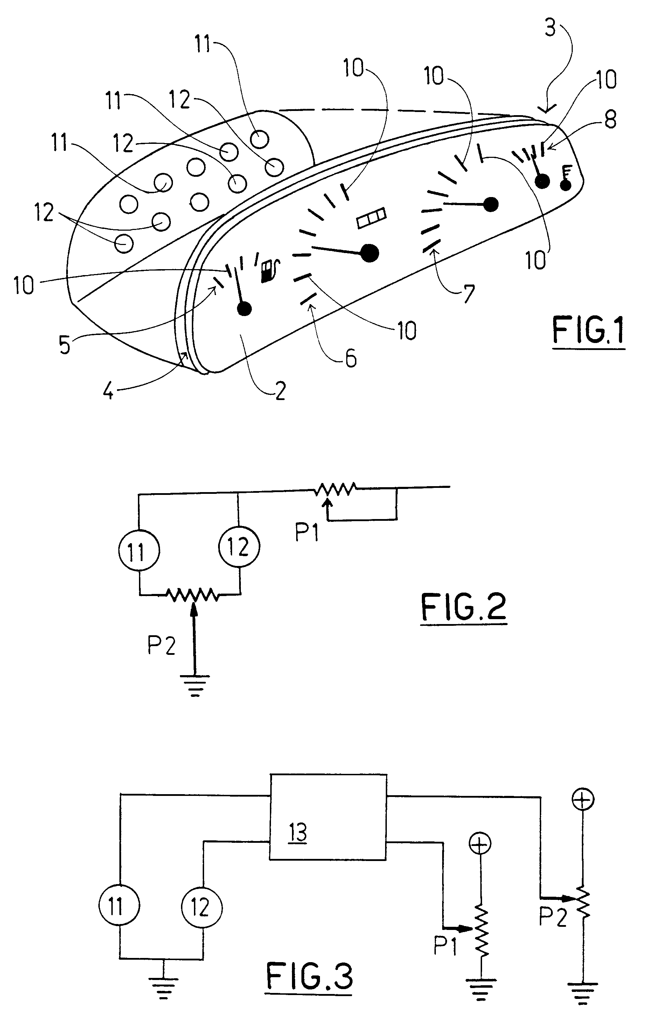

In Figure 1, an analog instrument panel, indicated overall by the reference numeral 1, is composed of an opaline screen 4 on which various graduated scales 5, 6, 7 and 8 are silk-screen printed, and comprising conventional indicating pointers. The illustrated instrument panel comprises a fuel level indicator 5, a speedometer 6, an r.p.m. indicator 7 and a cooling liquid temperature indicator 8.

The various graduated scales provided on the panel 3 are formed from a series of narrow, elongate apertures 10 which allow the light originating from two light sets, for example red 11 and green 12, situated behind the screen 4, to filter through.

With reference to the scheme of Figure 3, according to the invention the driver can continuously adjust the light intensity of the lights 11 and 12 by adjusting a first potentiometer P1, and at the same time can select the preferred colour by adjusting a second potentiometer P2 by which the resultant colour can be varied continuously between the two extreme cases, ie only red or only green.

As can be seen, the red lights 11 and green lights 12 are connected in parallel, so that the potentiometer P2 is able to vary between two extreme configurations, namely a first in which the current passing through the red lights 11 is much greater than that through the green lights 12, so that the resultant light is red, and a second extreme configuration in which the resultant light is green.

In the electrical scheme shown in Figure 3, between the potentiometers P1 and P2 and the lights 11, 12, there is connected a basic electronic circuit 13, the purpose of which is to power the two lights 11 and 12 alternately at variable frequency and voltage. This is in the form of a chopper device, the components of which require no description as it is well known in many technical fields.

As is apparent, the invention offers the user a wide range of choice, of which one extreme is an instrument panel with soft light of restful colour, for example green, which is suitable for night driving on country roads without lighting. A soft light can also be satisfactory in the case of fog, when the driver is continually watching the road and any intense light source could cause annoyance. At the other extreme the light can be of bright red colour for driving in towns or tunnels, where the external lighting is already fairly intense, such that soft lights on the instrument panel could not be immediately read. The light intensity and colour can be infinitely varied between these extremes.

In the described examples reference has been made to two colours, red and green, but it is apparent that an instrument panel can be constructed according to the invention using lamps of various colours with their light striking the dark background of the silk-screen printed surface 2.

Again, in the illustrated examples the two light sets 11 and 12 are positioned behind the screen 4 with the light filtering through the apertures 10. In a different embodiment (not shown) the light sets 11 and 12, instead of projecting from behind through the apertures on the instrument panel, can project laterally onto the front of an instrument panel of different form provided with light reflecting impressions, to again obtain the aforesaid advantages.

Although a single preferred embodiment of the device has been described it is not limited to this, and numerous modifications obvious to an expert of the art can be made thereto without leaving the scope of the invention as defined by the following claims.

## Claims

1. A background lighting for illuminating a plurality of meters of a motor vehicle instrument panel comprising a screen (4), with its outer surface (2) preferably of dark colour, in which a series of apertures (10) are provided for the passage of light from the rear to the front of the screen, or a series of impressions (10) for reflecting the light onto the screen, said apertures or impressions (10) being provided in correspondence with graduated scales (5, 6, 7, 8) for the meters present on the panel, the instrument panel comprising in combination:
- at least two light sets (11, 12) of different colour;
- first means (P1) for manually adjusting the total current fed to said light sets (11, 12);
- second means (P2) for varying the light intensity of one of said light sets (11, 12) relative to the other.

2. An instrument panel as claimed in claim 1, characterised in that said light sets (11) and (12) are connected together in parallel.

3. An instrument panel as claimed in claims 1 and 2, characterised in that said first means (P1) and said second means (P2) are potentiometers.

## Patentansprüche

1. Hintergrundbeleuchtung zum Beleuchten einer Vielzahl von Anzeigeinstrumenten der Armaturentafel eines Kraftfahrzeuges, mit einem Schirm (4) mit vorzugsweise dunkelfarbiger Außenfläche (2), in dem eine Reihe von Öffnungen (10) für den Durchtritt von Licht von der Rückseite zur Vorderseite des Schirms oder eine Reihe von Druckmarkierungen (10) zum Reflektieren von Licht auf den Schirm vorgesehen sind, wobei die Öffnungen oder die Druckmarkierungen (10) entsprechend Skaleneinteilungen (5, 6, 7, 8) für die an der Tafel vorgesehenen Anzeigeinstrumente angeordnet sind, wobei die Armaturentafel in Kombination aufweist:
- mindestens zwei Lichtquellen (11, 12) von verschiedener Farbe;
- erste Mittel (P1) zur manuellen Einstellung des gesamten den Lichtquellen (11, 12) zugeführten Stroms;
- zweite Mittel (P2) zum Variieren der Lichtintensität einer der Lichtquellen (11, 12) relativ zur anderen.

2. Armaturentafel nach Anspruch 1, dadurch **gekennzeichnet,** daß die Lichtquellen (11, 12) zueinander parallel geschaltet sind.

3. Armaturentafel nach Anspruch 1 und 2, dadurch **gekennzeichnet,** daß die ersten Mittel (P1) und die zweiten Mittel (P2) Potentiometer sind.

## Revendications

1. Un éclairage de fond pour éclairer une pluralité de compteurs d'un tableau de bord de véhicule à moteur comprenant un écran (4) avec sa surface extérieure (2), de préférence, de couleur foncée,dans lequel une série d'ouvertures (10) est prévue pour le passage de la lumière de l'arrière à l'avant de l'écran, ou une série d'impressions (10) pour réfléchir la lumière sur l'écran, lesdites ouvertures ou impressions (10) étant prévues en correspondance avec des repères gradués (5, 6, 7, 8) pour les compteurs présents sur le tableau de bord, le tableau de bord comprenant en combinaison :
- au moins deux groupes de lumières (11, 12) de couleurs différentes ;
- un premier moyen (P1) pour régler manuellement l'alimentation de courant totale auxdits groupes de lumières (11, 12) ;
- un second moyen (P2) pour faire varier l'intensité de lumière de l'un desdits groupes de lumières (11, 12) par rapport à l'autre.

2. Un tableau de bord selon la revendication 1, caractérisé en ce que lesdits groupes de lumières (11) et (12) sont reliés ensemble en parallèle.

3. Un tableau de bord selon la revendication 1 ou 2, caractérisé en ce que ledit premier moyen (P1) et ledit second moyen (P2) sont des potentiomètres.
